# EUROPEAN PATENT SPECIFICATION

(11) **EP 3 136 594 B1**
(45) Date of publication and mention of the grant of the patent: **08.01.2020**
(21) Application number: 16185850.1
(22) Date of filing: 26.08.2016
(51) Int. Cl.: H02S 40/34

(54) **PHOTOVOLTAIC JUNCTION BOX**
PHOTOVOLTAIKANSCHLUSSKASTEN
BOITE DE RACCORDEMENT PHOTOVOLTAÏQUE

(30) Priority: 26.08.2015 CN 201520650930 U
(43) Date of publication of application: 01.03.2017
(73) Proprietor: Tyco Electronics (Shanghai) Co. Ltd., Shanghai (CN)
(72) Inventor: Li, Cui, Shanghai 200233 (CN); Zhong, Yuan, Shanghai 200233 (CN); Xu, Xiang, Shanghai 200233 (CN); Lv, Wenbo, Shanghai 200233 (CN)
(74) Representative: Grünecker Patent- und Rechtsanwälte PartG mbB

(56) References cited:
- CN-A- 103 701 407
- DE-A1-102008 028 462
- DE-A1-102010 029 714
- US-A1- 2012 205 149

## Description

### BACKGROUND OF THE INVENTION

### Field of the Invention

The present disclosure relates to a photovoltaic junction box to be mounted on a solar panel.

### Description of the Related Art

Solar panel (or solar cell panel) is generally adapted to collect solar energy and transform the collected solar energy to electrical energy. When the solar panel is sheltered by a cloud or some leaves and the like to produce a shadow on the solar panel, it will cause a heat plate effect on the sheltered cell pieces and thus result in over-burning of the cell pieces. A diode in the junction box is acted as a bypass when producing the heat plate effect so as to prevent the cell pieces from being over-burnt.

In the prior art, the photovoltaic junction box is directly mounted on a solar panel and is electrically connected with a bus bar of the solar panel. The photovoltaic junction box is provided with a plurality of conductive terminals and a plurality of surface-mounted diodes soldered on respective conduction terminals, wherein an anode and a cathode of each diode are soldered on a pair of adjacent conduction terminals, respectively. In operation, the diode will produce heat, and then the produced heat will be transferred to the conduction terminals.

In the prior art, opposite edges of adjacent conduction terminals exhibit lines parallel to each other and substantially perpendicular to a lengthwise direction of the solar junction box, and the anode and the cathode of the diode are soldered on areas in the vicinity of the edges of the adjacent conduction terminals, respectively. In this way, arranging directions of the diodes welded on the conduction terminals are completely consistent, and the arranging direction of each diode is commonly parallel to the lengthwise direction of the solar junction box. The current arrangement of the diodes will cause that the heat produced by the diodes in operation will distribute unevenly inside a case of the solar junction box, and thus the current-carrying capacity of the solar junction box will be reduced, or the heat produced by the diodes may not dissipate in time, deteriorating or damaging the diode over time.

A photovoltaic connection box is shown in DE 10 2008 028 462 A1. The box uses a plurality of conduction terminals to which a plurality of surface mounted diodes is connected in a manner that the orientation of the diodes differs from each other.

### SUMMARY OF THE INVENTION

The object of the present disclosure is to solve the above mentioned technical problems or other technical problems of the prior art.

One object of the present disclosure is to provide a photovoltaic conduction box, in which, arrangement directions of two adjacent diodes are different from each other such that the heat produced by the diodes in operation will distribute more evenly in the box body of the photovoltaic connection box, thereby improving the heat dissipation efficiency and thus the current-carrying capacity of the photovoltaic connection box.

According to one aspect of the present disclosure, there is provided a photovoltaic connection box adapted to be mounted on a solar panel, comprising: a box body having a first end, and a second end opposite to each other in a lengthwise direction thereof and a first side and a second side opposite to each other in a widthwise direction thereof; four conduction terminals comprising a first conduction terminal, a second conduction terminal, a third conduction terminal and a fourth conduction terminal received in the box body arranged sequentially from the first end to the second end of the box body; and three surface-mounted diodes comprising a first surface-mounted diode, a second surface-mounted diode and a third surface-mounted diode arranged sequentially from the first end to the second end of the box body, an anode pin and a cathode pad of each diode being soldered on two adjacent conduction terminals, respectively, wherein the plurality of surface-mounted diodes are arranged so that an angle defined between two axes of adjacent surface-mounted diodes is not equal to zero, wherein the first conduction terminal has a first edge facing the second conduction terminal, and the second conduction terminal has a first edge facing the first conduction terminal, wherein the first edge of the first conduction terminal has a first edge segment and the first edge of the second conduction terminal has a first edge segment, wherein the anode pin of the first surface-mounted diode is soldered on a border area of the first edge segment of the first conduction terminal, and the cathode pad of the first diode is soldered on a border area of the first edge segment of the second conduction terminal, wherein the first edge segment of the first conduction terminal extends towards the first end of the box body, and the first edge segment of the second conduction terminal extends towards the first end of the box body; wherein the first edge segment of the first conduction terminal and the first edge segment of the second conduction terminal are arranged opposite to each other and away from each other in the widthwise direction of the box body; and wherein the first edge of the second conduction terminal extends from the first side to the first end of the box body along a curving path.

According to one exemplary embodiment of the present disclosure, at least one of the plurality of surface-mounted diodes is arranged to be not parallel to the lengthwise direction of the box body.

According to a further exemplary embodiment of the present disclosure, the plurality of conduction terminals is sequentially placed on a bottom face of a receiving chamber of the box body.
According to a further exemplary embodiment of the present disclosure, the photovoltaic connection box has four conduction terminals and three surface-mounted diodes. The four conduction terminals comprises a first conduction terminal, a second conduction terminal, a third conduction terminal and a fourth conduction terminal sequentially from the first end to the second end of the box body; and the three surface-mounted diodes comprise a first surface-mounted diode, a second surface-mounted diode and a third surface-mounted diode sequentially from the first end to the second end of the box body. The photovoltaic connection box further comprises: a first wire, one end of which being introduced into the box body from the first end thereof and electrically connected to the first conduction terminal; and a second wire, one end of which being introduced into the box body from the second end thereof and electrically connected to the fourth conduction terminal. The first wire is soldered or crimped onto the first conduction terminal, and the second wire is soldered or crimped onto the fourth conduction terminal.

According to a further exemplary embodiment of the present disclosure, the first conduction terminal has a first edge opposite to the second conduction terminal, and the second conduction terminal has a first edge opposite to the first conduction terminal; the first edge of the first conduction terminal has a first edge segment extending to the first end of the box body, and the first edge of the second conduction terminal has a first edge segment extending to the first end of the box body; the first edge segment of the first conduction terminal and the first edge segment of the second conduction terminal are opposite to each other and apart from each other in the widthwise direction of the box body; and the anode pin of the first surface-mounted diode is soldered on a border area of the first edge segment of the first conduction terminal, and the cathode pad of the first diode is soldered on a border area of the first edge segment of the second conduction terminal.

According to a further exemplary embodiment of the present disclosure, the first edge of the second conduction terminal extends from the first side to the first end of the box body along a curving path.

According to a further exemplary embodiment of the present disclosure, the first conduction terminal is disposed within an area defined by the first edge of the second conduction terminal, and the first side and the first end of the box body.

According to a further exemplary embodiment of the present disclosure, the fourth conduction terminal has a first edge opposite to the third conduction terminal, and the third conduction terminal has a first edge opposite to the fourth conduction terminal; the first edge of the fourth conduction terminal has a first edge segment extending to the second end of the box body, and the first edge of the third conduction terminal has a first edge segment extending to the second end of the box body; the first edge segment of the fourth conduction terminal and the first edge segment of the third conduction terminal are opposite to each other and apart from each other in the widthwise direction of the box body; and the anode pin of the third surface-mounted diode is soldered on a border area of the first edge segment of the third conduction terminal, and the cathode pad of the third diode is soldered on a border area of the first edge segment of the fourth conduction terminal.

According to a further exemplary embodiment of the present disclosure, the first edge of the third conduction terminal extends from the first side to the second end of the box body along a curving path.

According to a further exemplary embodiment of the present disclosure, the fourth conduction terminal is disposed within an area defined by the first edge of the third conduction terminal, and the first side and the second end of the box body.

According to a further exemplary embodiment of the present disclosure, the second conduction terminal has a second edge opposite to the third conduction terminal, and the third conduction terminal has a second edge opposite to the second conduction terminal; and the anode pin of the second surface-mounted diode is soldered on the second edge of the second conduction terminal, and the cathode pad of the second diode is soldered on the second edge of the third conduction terminal.

According to a further exemplary embodiment of the present disclosure, the second edge of the second conduction terminal extends from the first side to the second side of the box body along a curving path; and the second edge of the third conduction terminal extends from the first side to the second side of the box body along a curving path.

According to a further exemplary embodiment of the present disclosure, the first surface-mounted diode is arranged to have an angle of about 90 degree with respect to the lengthwise direction of the box body; the second surface-mounted diode is arranged to have an angle of about 45 degree with respect to the lengthwise direction of the box body; and the third surface-mounted diode is arranged to have an angle of about 270 degree with respect to the lengthwise direction of the box body.

According to a further exemplary embodiment of the present disclosure, the first surface-mounted diode is arranged to have an angle of about 45 degree with respect to the second surface-mounted diode, and the second surface-mounted diode is arranged to have an angle of about 135 degree with respect to the third surface-mounted diode.

According to a further exemplary embodiment of the present disclosure, a surface area of the third conduction terminal is larger than that of other conduction terminals.

According to a further exemplary embodiment of the present disclosure, the surface area of the third conduction terminal is larger than that of the second conduction terminal; the surface area of the second conduction terminal is larger than that of the fourth conduction terminal; and the surface area of the fourth conduction terminal is larger than that of the first conduction terminal.

In the various exemplary embodiments of the present disclosure, arrangement directions of two adjacent diodes are different from each other such that the heat produced by the diodes when working is distributed more evenly in the box body of the photovoltaic connection box, thereby improving the heat dissipation efficiency and thus the current-carrying capacity of the photovoltaic connection box.

### BRIEF DESCRIPTION OF THE DRAWINGS

The above and other features of the present disclosure will become more apparent by describing in detail exemplary embodiments thereof with reference to the accompanying drawings, in which:
Fig.1 shows a schematic perspective view of a photovoltaic junction box according to an exemplary embodiment of the present disclosure; and
Fig. 2 shows a plan arrangement schematic view of four conduction terminals and three surface-mounted diodes in the photovoltaic junction box as shown in Fig.1.

### DETAILED DESCRIPTION OF PREFERRED EMBODIMENTS OF THE IVENTION

Technical solutions of the present disclosure will be described hereinafter in detail with reference to the attached drawings and in combination with the embodiments, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

Furthermore, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general technical concept of the invention, there is provided a photovoltaic connection box adapted to be mounted on a solar panel, comprising: a box body having a first end and a second end opposite to each other in a lengthwise direction thereof, and a first side and a second side opposite to each other in a widthwise direction thereof; a plurality of conduction terminals received in the box body; and a plurality of surface-mounted diodes, an anode pin and a cathode pad of each diode being soldered on two adjacent conduction terminals, respectively, wherein the plurality of diodes are arranged so that an angle defined between two adjacent surface-mounted diodes is not equal to zero.

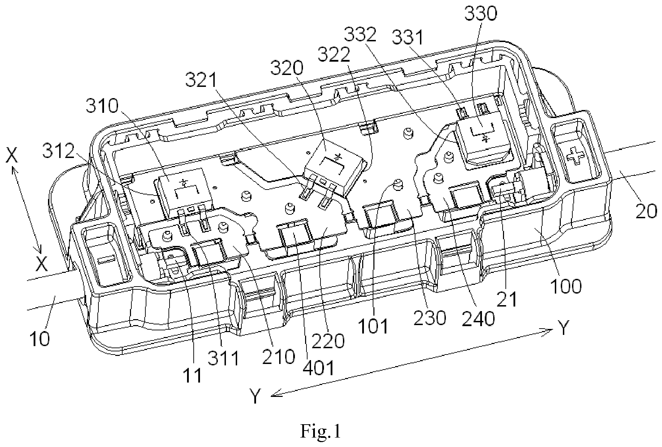

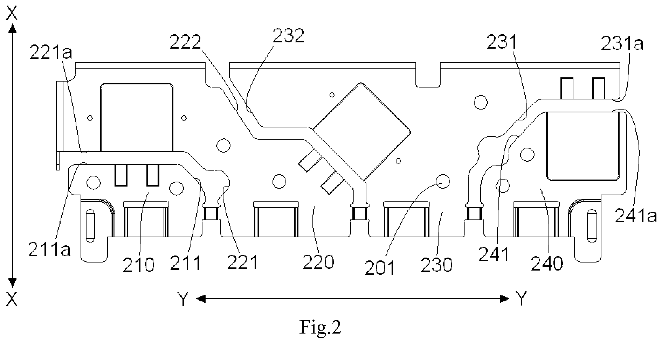

Fig.1 shows a schematic perspective view of a photovoltaic junction box according to an exemplary embodiment of the present disclosure; and Fig. 2 shows a plan arrangement schematic view of four conduction terminals 210, 220, 230 and 240 and three surface-mounted diodes 310, 320 and 330 in the photovoltaic junction box as shown in Fig.1.

In an exemplary embodiment of the present disclosure, there is disclosed a photovoltaic connection box adapted to be mounted on a solar panel. As shown in Fig.1 and Fig.2, the photovoltaic junction box mainly comprises a box body 100, a plurality of conduction terminals 210, 220, 230 and 240, and a plurality of surface-mounted diodes 310, 320 and 330.

As shown in Figs. 1 and 2, in the illustrated embodiment, the box body 100 has a first end (a left end in Fig. 2) and a second end (a right end in Fig. 2) opposite to each other in a lengthwise direction Y thereof, and a first side (a lower side in Fig. 2) and a second side (an upper side in Fig. 2) opposite to each other in a widthwise direction X thereof. The conduction terminals 210, 220, 230 and 240 are received in the box body 100, and the surface-mounted diodes 310, 320 and 330 are mounted on the conduction terminals 210, 220, 230 and 240 by means of Surface Mount Technology (SMT).

In an exemplary embodiment of the present disclosure, as shown in Figs. 1 and 2, two adjacent surface-mounted diodes 310, 320 and 330 are arranged such that an angle defined between them, specifically, between axes of the two adjacent surface-mounted diodes, is not equal to zero. In the illustrated embodiment, a first surface-mounted diode 310 is arranged to have an angle of about 45 degree with respect to a second surface-mounted diode 320, and the second surface-mounted diode 320 is arranged to have an angle of about 135 degree with respect to a third surface-mounted diode 330. However, the present disclosure is not limited thereto. The angle defined between two adjacent surface-mounted diodes 310, 320 and 330 may be equal to any angle except for zero, such as 90 degree, 180 degree, or 270 degree.

In the previous embodiments, since the arrangement directions of two adjacent surface-mounted diodes 310, 320 and 330 inside the box body 100 of the photovoltaic connection box are different from each other, the heat produced by the diodes 310, 320 and 330 when working will distribute more evenly in the box body 100 of the photovoltaic connection box, thereby improving the heat dissipation efficiency and thus the current-carrying capacity of the photovoltaic connection box.

In an embodiment of the present disclosure, as shown in Figs. 1 and 2, each surface-mounted diode 310, 320 or 330 comprises a flat body, at least one anode pin 311, 321 or 331 extending outwardly from an edge of the flat body, and a cathode pad 312, 322 or 332 located on a bottom of the flat body.

As shown in Figs. 1 and 2, a plurality of surface-mounted diodes 310, 320 and 330 are arranged to be not parallel to the lengthwise direction Y of the box body 100. A plurality of conduction terminals 210, 220, 230 and 240 are sequentially placed on a bottom of a receiving chamber of the box body 100 from the first end to the second end of the box body 100.

In the illustrated embodiment, as shown in Figs. 1 and 2, the photovoltaic connection box has four conduction terminals 210, 220, 230 and 240 and three surface-mounted diodes 310, 320 and 330, wherein one diode 310, 320 or 330 is surface-mounted on two adjacent conduction terminals 210, 220; 220, 230; or 230, 240.

As shown in Figs. 1 and 2, in the illustrated embodiment, the four conduction terminals 210, 220, 230 and 240 are arranged in the lengthwise direction Y of the box body 100. For the sake of easy explanation, these four conduction terminals 210, 220, 230 and 240 comprise a first conduction terminal 210, a second conduction terminal 220, a third conduction terminal 230 and a fourth conduction terminal 240 arranged sequentially from the first end to the second end of the box body 100 in Fig. 1. These three surface-mounted diodes 310, 320 and 330 comprise a first surface-mounted diode 310, a second surface-mounted diode 320 and a third surface-mounted diode 330 arranged sequentially from the first end to the second end of the box body 100 in Fig.1 .

As shown in Figs. 1 and 2, in the illustrated embodiment, the anode pins 311 and the cathode pad 312 of the first surface-mounted diode 310 are soldered on the first conduction terminal 210 and the second conduction terminal 220 by means of Surface Mount Technology, respectively; the anode pins 321 and the cathode pad 322 of the second surface-mounted diode 320 are soldered on the second conduction terminal 220 and the third conduction terminal 230, respectively; and the anode pins 331 and the cathode pad 332 of the third surface-mounted diode 330 are soldered on the third conduction terminal 230 and the fourth conduction terminal 240, respectively.

Continuously referring to Figs. 1 and 2, in the illustrated embodiment, the photovoltaic connection box further comprises a first wire 10 and a second wire 20. One end of the first wire 10 is introduced into the box body 100 from the first end thereof, and a conductor 11 of the first wire 10 is electrically connected to the first conduction terminal 210. To be specific, the conductor 11 of the first wire 10 may be soldered or crimped onto the first conduction terminal 210. One end of the second wire 20 is introduced into the box body 100 from the second end thereof opposite to the one end, and a conductor 21 of the second wire 20 is electrically connected to the fourth conduction terminal 240. To be specific, the conductor 21 of the second wire 20 may be soldered or crimped onto the fourth conduction terminal 240.

Please be noted that the heat produced by the diodes in operation mainly concentrated on the cathode pad, and a little heat exists on the anode pin. Therefore, it is necessary to improve a thermal conductivity of the conduction terminal, on which the cathode pad is soldered.

In the illustrated embodiment, as shown in Figs. 1 and 2, the first conduction terminal 210 is welded with only the anode pin 311; the second conduction terminal 220 is welded with the anode pin 321 as well as the cathode pad 312; the third conduction terminal 230 is welded with the anode pin 331 as well as the cathode pad 322; and the fourth conduction terminal 240 is welded with only the cathode pad 332. Thus, in the illustrated embodiment, in operation, the heat transmitted to the first conduction terminal 210 is the least; the heat transmitted to the fourth conduction terminal 240 is more than that transmitted to the first conduction terminal 210; and the heat transmitted to the second conduction terminal 220 or the third conduction terminal 230 is more than that transmitted to the fourth conduction terminal 240. Furthermore, since the third conduction terminal 230 is much closer to a central area of the box body 100 than the second conduction terminal 220, the heat dissipation performance of the third conduction terminal 230 should be much poorer than that of the second conduction terminal 220.

Further, as previously described, the heat dissipation load of the third conduction terminal 230 is larger than that of the second conduction terminal 220; the heat dissipation load of the second conduction terminal 220 is larger than that of the fourth conduction terminal 240; and the heat dissipation load of the fourth conduction terminal 240 is larger than that of the first conduction terminal 210. Therefore, in an exemplary embodiment of the present disclosure, as shown in Figs.1 and 2, in order to optimize the overall heat dissipation efficiency of the photovoltaic connection box, a surface area of the third conduction terminal 230 is larger than that of the second conduction terminal 220; the surface area of the second conduction terminal 220 is larger than that of the fourth conduction terminal 240; and the surface area of the fourth conduction terminal 240 is larger than that of the first conduction terminal 210.

Moreover, in order to further improve the overall heat dissipation efficiency of the photovoltaic connection box, in an embodiment of the present disclosure, a distance between two adjacent surface-mounted diodes 310, 320 and 330 is increased as much as possible such that the heat produced by the diodes 310, 320 and 330 when working may be distributed in the box body 100 of the photovoltaic connection box more evenly.

As shown in Figs. 1 and 2, in the illustrated embodiment, the first conduction terminal 210 has a first edge 211 facing the second conduction terminal 220, and the second conduction terminal 220 has a first edge 221 facing the first conduction terminal 210. The first edge 211 of the first conduction terminal 210 has a first edge segment 211a extending toward the first end of the box body 100, and the first edge 221 of the second conduction terminal 220 has a first edge segment 221a extending toward the first end of the box body 100. The first edge segment 211a of the first conduction terminal 210 and the first edge segment 221a of the second conduction terminal 220 are arranged to face each other and away from each other in the widthwise direction X of the box body 100. The anode pin 311 of the first surface-mounted diode 310 is soldered on a border area of the first edge segment 211a of the first conduction terminal 210, and the cathode pad 312 of the first diode 310 is soldered on a border area of the first edge segment 221a of the second conduction terminal 220, such that an axis of the first surface-mounted diode 310 is arranged parallel to the widthwise direction X.

In this way, since the first surface-mounted diode 310 is mounted at a position close to the first end of the box body 100 as much as possible, the distance between the first diode 310 and the second diode 320 is increased.

Similarly, as shown in Figs. 1 and 2, in an embodiment of the present disclosure, the fourth conduction terminal 240 has a first edge 241 facing the third conduction terminal 230, and the third conduction terminal 230 has a first edge 231 facing the fourth conduction terminal 240. The first edge 241 of the fourth conduction terminal 240 has a first edge segment 241a extending toward the second end of the box body 100, and the first edge 231 of the third conduction terminal 230 has a first edge segment 231a extending toward the second end of the box body 100. The first edge segment 241a of the fourth conduction terminal 240 and the first edge segment 231a of the third conduction terminal 230 are arranged to face each other and away from each other in the widthwise direction X of the box body 100. The anode pin 331 of the third surface-mounted diode 330 is soldered on a border area of the first edge segment 231a of the third conduction terminal 230, and the cathode pad 332 of the third diode 330 is soldered on a border area of the first edge segment 241a of the fourth conduction terminal 240, such that an axis of the third surface-mounted diode 330 is arranged parallel to the widthwise direction X.

In this way, since the third surface-mounted diode 330 is mounted at a position close to the second end of the box body 100 as much as possible, the distance between the third diode 330 and the second diode 320 is increased.

In the illustrated embodiment, as shown in Figs. 1 and 2, the first edge 221 of the second conduction terminal 220 extends from the first side to the first end of the box body 100 along a curving path. The first conduction terminal 210 is disposed within an area defined by the first edge 221 of the second conduction terminal 220, and the first side and the first end of the box body 100.

In the illustrated embodiment, as shown in Figs. 1 and 2, the first edge 231 of the third conduction terminal 230 extends from the first side to the second end of the box body 100 along a curving path. The fourth conduction terminal 240 is disposed within an area defined by the first edge 231 of the third conduction terminal 230, and the first side and the second end of the box body 100.

As shown in Figs. 1 and 2, in an embodiment of the present disclosure, the second conduction terminal 220 has a second edge 222 facing the third conduction terminal 230, and the third conduction terminal 230 has a second edge 232 facing the second conduction terminal 220. The anode pin 321 of the second surface-mounted diode 320 is soldered on the second edge 222 of the second conduction terminal 220, and the cathode pad 322 of the second diode 320 is soldered on the second edge 232 of the third conduction terminal 230.

As shown in Figs. 1 and 2, in an embodiment of the present disclosure, the second edge 222 of the second conduction terminal 220 extends from the first side to the second side of the box body 100 along a curving path; and the second edge 232 of the third conduction terminal 230 extends from the first side to the second side of the box body 100 along a curving path.

In the illustrated embodiment, as shown in Figs. 1 and 2, the first surface-mounted diode 310 is arranged such that the axis thereof has an angle of about 90 degree with respect to the lengthwise direction Y of the box body 100; the second surface-mounted diode 320 is arranged such that the axis thereof has an angle of about 45 degree with respect to the lengthwise direction Y of the box body 100; and the third surface-mounted diode 330 is arranged such that the axis thereof has an angle of about 270 degree with respect to the lengthwise direction Y of the box body 100.

As shown in Figs. 1 and 2, in the illustrated embodiment, each of conduction terminals 210, 220, 230 and 240 is formed with a plurality of positioning holes 201, and a bottom wall of an internal portion of the box body 100 is formed with a plurality of positioning stubs 101 engaged with the positioning hole 201, respectively, so as to position and fix the conduction terminals 210, 220, 230 and 240.

As shown in Figs. 1 and 2, in the illustrated embodiment, bus bars 401 provided on the solar plane (not shown) are introduced into the box body 100 and soldered to the conduction terminals 210, 220, 230 and 240, respectively.

Although the present disclosure has been described with reference to the attached drawings, the embodiments disclosed in the attached drawings are intended to describe the preferred embodiments of the present disclosure exemplarily, but should not be construed as a limitation to the present disclosure.

Although several embodiments of the general concept of the present disclosure have been shown and described, it would be appreciated by those skilled in the art that various changes or modifications may be made in these embodiments without departing from the principles of the disclosure, the scope of which is defined in the claims and their equivalents.

As used herein, term "comprising" or "having" should be understood as not excluding other elements or steps, and term "a" or "an" should be understood as not excluding plural elements or steps. In addition, any reference numeral in claims should not be understood as the limitation of the scope of the present disclosure.

## Claims

1. A photovoltaic connection box adapted to be mounted on a solar panel, comprising:
a box body (100) having a first end and a second end opposite to each other in a lengthwise direction (Y) thereof, and a first side and a second side opposite to each other in a widthwise direction (X) thereof;
four conduction terminals (210, 220, 230, 240) comprising a first conduction terminal (210), a second conduction terminal (220), a third conduction terminal (230) and a fourth conduction terminal (240) received in the box body (100) and being arranged sequentially from the first end to the second end of the box body (100); and
three surface-mounted diodes (310, 320, 330) comprising a first surface-mounted diode (310), a second surface-mounted diode (320) and a third surface-mounted diode (330) arranged sequentially from the first end to the second end of the box body (100), an anode pin (311, 321, 331) and a cathode pad (312, 322, 332) of each diode (310, 320, 330) being soldered on two adjacent conduction terminals (210, 220, 230, 240), respectively,
wherein the plurality of surface-mounted diodes (310, 320, 330) are arranged so that an angle defined between axes of two adjacent surface-mounted diodes (310, 320, 330) is not equal to zero;
wherein the first conduction terminal (210) has a first edge (211) facing the second conduction terminal (220), and the second conduction terminal (220) has a first edge (221) facing the first conduction terminal (210);
wherein the first edge (211) of the first conduction terminal (210) has a first edge segment (211a) and the first edge (221) of the second conduction terminal (220) has a first edge segment (221a);
wherein the anode pin (311) of the first surface-mounted diode (310) is soldered on a border area of the first edge segment (211a) of the first conduction terminal (210), and the cathode pad (312) of the first diode (310) is soldered on a border area of the first edge segment (221a) of the second conduction terminal (220);
**characterized in that**
the first edge segment (211a) of the first conduction terminal (210) extends toward the first end of the box body (100), and the first edge segment (221a) of the second conduction terminal (220) extends toward the first end of the box body (100);
wherein the first edge segment (211a) of the first conduction terminal (210) and the first edge segment (221a) of the second conduction terminal (220) are arranged opposite to each other and away from each other in the widthwise direction (X) of the box body (100);
and wherein the first edge (221) of the second conduction terminal (220) extends from the first side to the first end of the box body (100) along a curving path.

2. The photovoltaic connection box according to claim 1, wherein at least one of the plurality of surface-mounted diodes (310, 320, 330) is arranged to be not parallel to the lengthwise direction (Y) of the box body (100).

3. The photovoltaic connection box according to claim 1, wherein the plurality of conduction terminals (210, 220, 230, 240) is sequentially placed on a bottom of a receiving chamber of the box body (100).

4. The photovoltaic connection box according to claim 1,
wherein the photovoltaic connection box further comprises:
a first wire (10), one end of which being introduced into the box body (100) from the first end thereof and electrically connected to the first conduction terminal (210); and
a second wire (20), one end of which being introduced into the box body (100) from the second end thereof and electrically connected to the fourth conduction terminal (240); and
wherein the first wire (10) is soldered or crimped onto the first conduction terminal (210), and the second wire (20) is soldered or crimped onto the fourth conduction terminal (240).

5. The photovoltaic connection box according to any of claims 1 to 4, wherein
the first conduction terminal (210) is disposed within an area defined by the first edge (221) of the second conduction terminal (220), and the first side and the first end of the box body (100).

6. The photovoltaic connection box according to claim 5,
wherein the fourth conduction terminal (240) has a first edge (241) facing the third conduction terminal (230), and the third conduction terminal (230) has a first edge (231) facing the fourth conduction terminal (240);
wherein the first edge (241) of the fourth conduction terminal (240) has a first edge segment (241a) extending toward the second end of the box body (100), and the first edge (231) of the third conduction terminal (230) has a first edge segment (231a) extending toward the second end of the box body (100);
wherein the first edge segment (241a) of the fourth conduction terminal (240) and the first edge segment (231a) of the third conduction terminal (230) are arranged opposite to each other and away from each other in the widthwise direction (X) of the box body (100); and
wherein the anode pin (331) of the third surface-mounted diode (330) is soldered on a border area of the first edge segment (231a) of the third conduction terminal (230), and the cathode pad (332) of the third diode (330) is soldered on a border area of the first edge segment (241a) of the fourth conduction terminal (241).

7. The photovoltaic connection box according to claim 6, wherein
the first edge (231) of the third conduction terminal (230) extends from the first side to the second end of the box body (100) along a curving path.

8. The photovoltaic connection box according to claim 7, wherein
the fourth conduction terminal (240) is disposed within an area defined by the first edge (231) of the third conduction terminal (230), and the first side and the second end of the box body (100).

9. The photovoltaic connection box according to claim 8,
wherein the second conduction terminal (220) has a second edge (222) facing the third conduction terminal (230), and the third conduction terminal (230) has a second edge (232) facing the second conduction terminal (220); and
wherein the anode pin (321) of the second surface-mounted diode (320) is soldered on the second edge (222) of the second conduction terminal (220), and the cathode pad (322) of the second diode (320) is soldered on the second edge (232) of the third conduction terminal (230).

10. The photovoltaic connection box according to claim 9, wherein
the second edge (222) of the second conduction terminal (220) extends from the first side to the second side of the box body (100) along a curving path; and the second edge (232) of the third conduction terminal (230) extends from the first side to the second side of the box body (100) along a curving path.

11. The photovoltaic connection box according to claim 10, wherein
the first surface-mounted diode (310) is arranged to have an angle of about 90 degree with respect to the lengthwise direction (Y) of the box body (100);
the second surface-mounted diode (320) is arranged to have an angle of about 45 degree with respect to the lengthwise direction (Y) of the box body (100); and
the third surface-mounted diode (330) is arranged to have an angle of about 270 degree with respect to the lengthwise direction (Y) of the box body (100).

12. The photovoltaic connection box according to claim 11, wherein
the first surface-mounted diode (310) is arranged to have an angle of about 45 degree with respect to the second surface-mounted diode (320), and the second surface-mounted diode (320) is arranged to have an angle of about 135 degree with respect to the third surface-mounted diode (330).

13. The photovoltaic connection box according to claim 4, wherein
a surface area of the third conduction terminal (230) is larger than that of other conduction terminals (210, 220, 240).

14. The photovoltaic connection box according to claim 13, wherein
the surface area of the third conduction terminal ()230 is larger than that of the second conduction terminal (220); the surface area of the second conduction terminal (220) is larger than that of the fourth conduction terminal (240); and the surface area of the fourth conduction terminal (240) is larger than that of the first conduction terminal (210).

## Patentansprüche

1. Photovoltaik-Anschlusskasten, der zum Montieren an einem Solarpanel eingerichtet ist, wobei er umfasst:
einen Kasten-Körper (100), der ein erstes Ende und ein zweites Ende, die einander in einer Längsrichtung (Y) desselben gegenüberliegen, sowie eine erste Seite und eine zweite Seite hat, die einander in einer Breitenrichtung (X) desselben gegenüberliegen;
vier leitende Anschlüsse (210, 220, 230, 240), die einen ersten leitenden Anschluss (210), einen zweiten leitenden Anschluss (220), einen dritten leitenden Anschluss (230) sowie einen vierten leitenden Anschluss (240) umfassen, die in dem Kasten-Körper (100) aufgenommen sind und von dem ersten Ende zu dem zweiten Ende des Kasten-Körpers (100) aufeinanderfolgend angeordnet sind; sowie
drei oberflächenmontierte Dioden (310, 320, 330), die eine erste oberflächenmontierte Diode (310), eine zweite oberflächenmontierte Diode (320) sowie eine dritte oberflächenmontierte Diode (330) umfassen, die von dem ersten Ende zu dem zweiten Ende des Kasten-Körpers (100) aufeinanderfolgend angeordnet sind, wobei ein Anodenstift (311, 321, 331) und eine Kathoden-Anschlussstelle (312, 322, 332) jeder Diode (310, 320, 330) jeweils an zwei benachbarten leitenden Anschlüssen (210, 220, 230, 240) angelötet sind,
wobei die Vielzahl oberflächenmontierter Dioden (310, 320, 330) so angeordnet sind, dass ein zwischen Achsen zweier benachbarter oberflächenmontierter Dioden (310, 320, 330) gebildeter Winkel nicht gleich Null ist;
der erste leitende Anschluss (210) eine erste Kante (211) hat, die dem zweiten leitenden Anschluss (220) zugewandt ist, und der zweite leitende Anschluss (220) eine erste Kante (221) hat, die dem ersten leitenden Anschluss (210) zugewandt ist;
die erste Kante (211) des ersten leitenden Anschlusses (210) ein erstes Kanten-Segment (211a) hat und die erste Kante (221) des zweiten leitenden Anschlusses (220) ein erstes Kanten-Segment (221a) hat;
und der Anodenstift (311) der ersten oberflächenmontierten Diode (310) an einem Grenzbereich des ersten Kanten-Segments (211a) des ersten leitenden Anschlusses (210) angelötet ist, und die Kathoden-Anschlussstelle (312) der ersten Diode (310) an einem Grenzbereich des ersten Kanten-Segments (221a) des zweiten leitenden Anschlusses (220) angelötet ist;
**dadurch gekennzeichnet, dass**
sich das erste Kanten-Segment (211a) des ersten leitenden Anschlusses (210) auf das erste Ende des Kasten-Körpers (100) zu erstreckt und sich das erste Kanten-Segment (221a) des zweiten leitenden Anschlusses (220) auf das erste Ende des Kasten-Körpers (100) zu erstreckt;
wobei das erste Kanten-Segment (211a) des ersten leitenden Anschlusses (210) und das erste Kanten-Segment (221a) des zweiten leitenden Anschlusses (220) einander in der Breitenrichtung (X) des Kasten-Körpers (100) gegenüberliegend und voneinander entfernt angeordnet sind;
und sich die erste Kante (221) des zweiten leitenden Anschlusses (220) von der ersten Seite zu dem ersten Ende des Kasten-Körpers (100) entlang eines gekrümmten Weges erstreckt.

2. Photovoltaik-Anschlusskasten nach Anspruch 1, wobei wenigstens eine der Vielzahl oberflächenmontierter Dioden (310, 320, 330) so angeordnet ist, dass sie nicht parallel zu der Längsrichtung (Y) des Kasten-Körpers (100) ist.

3. Photovoltaik-Anschlusskasten nach Anspruch 1, wobei die Vielzahl leitender Anschlüsse (210, 220, 230, 240) an einem Boden einer Aufnahmekammer des Kasten-Körpers (100) aufeinanderfolgend angeordnet sind.

4. Photovoltaik-Anschlusskasten nach Anspruch 1,
wobei der Photovoltaik-Anschlusskasten des Weiteren umfasst:
einen ersten Draht (10), dessen eines Ende in den Kasten-Körper (100) über das erste Ende desselben eingeführt und elektrisch mit dem ersten leitenden Anschluss (210) verbunden ist; sowie
einen zweiten Draht (20), dessen eines Ende in den Kasten-Körper (100) über das zweite Ende desselben eingeführt und elektrisch mit dem vierten leitenden Anschluss (240) verbunden ist; und
wobei der erste Draht (10) an den ersten leitenden Anschluss (210) angelötet oder gequetscht ist, und der zweite Draht (20) an den vierten leitenden Anschluss (240) angelötet oder gequetscht ist.

5. Photovoltaik-Anschlusskasten nach einem der Ansprüche 1 bis 4, wobei
der erste leitende Anschluss (210) innerhalb eines Bereiches angeordnet ist, der durch die erste Kante (221) des zweiten leitenden Anschlusses (220) und die erste Seite sowie das erste Ende des Kasten-Körpers (100) gebildet wird.

6. Photovoltaik-Anschlusskasten nach Anspruch 5,
wobei der vierte leitende Anschluss (240) eine erste Kante (241) hat, die dem dritten leitenden Anschluss (230) zugewandt ist, und der dritte leitende Anschluss (230) eine erste Kante (231) hat, die dem vierten leitenden Anschluss (240) zugewandt ist;
die erste Kante (241) des vierten leitenden Anschlusses (240) ein erstes Kanten-Segment (241a) hat, das sich auf das zweite Ende des Kasten-Körpers (100) zu erstreckt und die erste Kante (231) des dritten leitenden Anschlusses (230) ein erstes Kanten-Segment (231a) hat, das sich auf das zweite Ende des Kasten-Körpers (100) zu erstreckt;
das erste Kanten-Segment (241a) des vierten leitenden Anschlusses (240) und das erste Kanten-Segment (231a) des dritten leitenden Anschlusses (230) einander in der Breitenrichtung (X) des Kasten-Körpers (100) gegenüberliegend und voneinander entfernt angeordnet sind; und
der Anodenstift (331) der dritten oberflächenmontierten Diode (330) an einem Grenzbereich des ersten Kanten-Segments (231a) des dritten leitenden Anschlusses (230) angelötet ist, und die Kathoden-Anschlussstelle (332) der dritten Diode (330) an einem Grenzbereich des ersten Kanten-Segments (241a) des vierten leitenden Anschlusses (241) angelötet ist.

7. Photovoltaik-Anschlusskasten nach Anspruch 6, wobei
sich die erste Kante (231) des dritten leitenden Anschlusses (230) von der ersten Seite zu dem zweiten Ende des Kasten-Körpers (100) entlang eines gekrümmten Weges erstreckt.

8. Photovoltaik-Anschlusskasten nach Anspruch 7, wobei
der vierte leitende Anschluss (240) innerhalb eines Bereiches angeordnet ist, der durch die erste Kante (231) des dritten leitenden Anschlusses (230) und die erste Seite sowie das zweite Ende des Kasten-Körpers (100) gebildet wird.

9. Photovoltaik-Anschlusskasten nach Anspruch 8,
wobei der zweite leitende Anschluss (220) eine zweite Kante (222) hat, die dem dritten leitenden Anschluss (230) zugewandt ist, und der dritte leitende Anschluss (230) eine zweite Kante (232) hat, die dem zweiten leitenden Anschluss (220) zugewandt ist; und
der Anodenstift (321) der zweiten oberflächenmontierten Diode (320) an der zweiten Kante (222) des zweiten leitenden Anschlusses (220) angelötet ist, und die Kathoden-Anschlussstelle (322) der zweiten Diode (320) an der zweiten Kante (232) des dritten leitenden Anschlusses (230) angelötet ist.

10. Photovoltaik-Anschlusskasten nach Anspruch 9, wobei
sich die zweite Kante (222) des zweiten leitenden Anschlusses (220) von der ersten Seite zu der zweiten Seite des Kasten-Körpers (100) entlang eines gekrümmten Weges erstreckt; und sich die zweite Kante (232) des dritten leitenden Anschlusses (230) von der ersten Seite zu der zweiten Seite des Kasten-Körpers (100) entlang eines gekrümmten Weges erstreckt.

11. Photovoltaik-Anschlusskasten nach Anspruch 10, wobei
die erste oberflächenmontierte Diode (310) so angeordnet ist, dass sie einen Winkel von ungefähr 90 ° in Bezug auf die Längsrichtung (Y) des Kasten-Körpers (100) hat;
die zweite oberflächenmontierte Diode (320) so angeordnet ist, dass sie einen Winkel von ungefähr 45 ° in Bezug auf die Längsrichtung (Y) des Kasten-Körpers (100) hat; und
die dritte oberflächenmontierte Diode (330) so angeordnet ist, dass sie einen Winkel von ungefähr 270 ° in Bezug auf die Längsrichtung (Y) des Kasten-Körpers (100) hat.

12. Photovoltaik-Anschlusskasten nach Anspruch 11, wobei
die erste oberflächenmontierte Diode (310) so angeordnet ist, dass sie einen Winkel von ungefähr 45 °in Bezug auf die zweite oberflächenmontierte Diode (320) hat, und die zweite oberflächenmontierte Diode (320) so angeordnet ist, dass sie einen Winkel von ungefähr 135 ° in Bezug auf die dritte oberflächenmontierte Diode (330) hat.

13. Photovoltaik-Anschlusskasten nach Anspruch 4, wobei
eine Flächenausdehnung des dritten leitenden Anschlusses (230) größer ist als die von anderen leitenden Anschlüssen (210, 220, 240).

14. Photovoltaik-Anschlusskasten nach Anspruch 13, wobei
die Flächenausdehnung des dritten leitenden Anschlusses (230) größer ist als die des zweiten leitenden Anschlusses (220); die Flächenausdehnung des zweiten leitenden Anschlusses (220) größer ist als die des vierten leitenden Anschlusses (240); und die Flächenausdehnung des vierten leitenden Anschlusses (240) größer ist als die des ersten leitenden Anschlusses (210).

## Revendications

1. Boîtier de raccordement photovoltaïque conçu pour être monté sur un panneau solaire, comprenant :
un corps de boîtier (100) comportant une première extrémité et une seconde extrémité opposées l'une à l'autre dans la direction de la longueur (Y) de celui-ci, ainsi qu'un premier côté et un second côté opposés l'un à l'autre dans la direction de la largeur (X) de celui-ci,
quatre bornes de conduction (210, 220, 230, 240) comprenant une première borne de conduction (210), une deuxième borne de conduction (220), une troisième borne de conduction (230) et une quatrième borne de conduction (240) accueillies dans le corps de boîtier (100) et disposées séquentiellement depuis la première extrémité jusqu'à la seconde extrémité du corps de boîtier (100), et
trois diodes montées en surface (310, 320, 330) comprenant une première diode montée en surface (310), une deuxième diode montée en surface (320) et une troisième diode montée en surface (330) disposées séquentiellement depuis la première extrémité jusqu'à la seconde extrémité du corps de boîtier (100), une broche d'anode (311, 321, 331) et un plot de cathode (312, 322, 332) de chaque diode (310, 320, 330) étant respectivement soudés sur deux bornes de conduction adjacentes (210, 220, 230, 240),
dans lequel les différentes diodes montées en surface (310, 320, 330) sont disposées de sorte à ce que l'angle défini entre les axes de deux diodes adjacentes montées en surface (310, 320, 330) ne soit pas nul,
dans lequel la première borne de conduction (210) comporte un premier bord (211) faisant face à la deuxième borne de conduction (220), et la deuxième borne de conduction (220) comporte un premier bord (221) faisant face à la première borne de conduction (210),
dans lequel le premier bord (211) de la première borne de conduction (210) comporte un premier segment de bord (211a) et le premier bord (221) de la deuxième borne de conduction (220) comporte un premier segment de bord (221a),
dans lequel la broche d'anode (311) de la première diode montée en surface (310) est soudée sur une surface de bordure du premier segment de bord (211a) de la première borne de conduction (210), et le plot de cathode (312) de la première diode (310) est soudé sur une surface de bordure du premier segment de bord (221a) de la deuxième borne de conduction (220),
**caractérisé en ce que**
le premier segment de bord (211a) de la première borne de conduction (210) s'étend vers la première extrémité du corps de boîtier (100), et le premier segment de bord (221a) de la deuxième borne de conduction (220) s'étend vers la première extrémité du corps de boîtier (100),
dans lequel le premier segment de bord (211a) de la première borne de conduction (210) et le premier segment de bord (221a) de la deuxième borne de conduction (220) sont disposés pour être opposés l'un à l'autre et à distance l'un de l'autre dans la direction de la largeur (X) du corps de boîtier (100),
et dans lequel le premier bord (221) de la deuxième borne de conduction (220) s'étend depuis le premier côté jusqu'à la première extrémité du corps de boîtier (100) le long d'un trajet s'incurvant.

2. Boîtier de connexion photovoltaïque selon la revendication 1, dans lequel au moins l'une de la pluralité de diodes montées en surface (310, 320, 330) est disposée pour ne pas être parallèle à la direction de la longueur (Y) du corps de boîtier (100).

3. Boîtier de connexion photovoltaïque selon la revendication 1, dans lequel les différentes bornes de conduction (210, 220, 230, 240) sont placées de façon séquentielle sur le fond d'un compartiment de réception du corps de boîtier (100).

4. Boîtier de connexion photovoltaïque selon la revendication 1,
le boîtier de connexion photovoltaïque comprenant en outre :
un premier câble (10) dont une extrémité est introduite dans le corps de boîtier (100) depuis sa première extrémité et est reliée électriquement à la première borne de conduction (210), et
un second câble (20) dont une extrémité est introduite dans le corps de boîtier (100) depuis sa seconde extrémité et est reliée électriquement à la quatrième borne de conduction (240), et
dans lequel le premier câble (10) est soudé ou serti sur la première borne de conduction (210), et où le second câble (20) est soudé ou serti sur la quatrième borne de conduction (240).

5. Boîtier de connexion photovoltaïque selon l'une quelconque des revendications 1 à 4, dans lequel
la première borne de conduction (210) est disposée dans une zone définie par le premier bord (221) de la deuxième borne de conduction (220) et par le premier côté et la première extrémité du corps de boîtier (100).

6. Boîtier de connexion photovoltaïque selon la revendication 5,
dans lequel la quatrième borne de conduction (240) comporte un premier bord (241) faisant face à la troisième borne de conduction (230), et la troisième borne de conduction (230) comporte un premier bord (231) faisant face à la quatrième borne de conduction (240),
dans lequel le premier bord (241) de la quatrième borne de conduction (240) comporte un premier segment de bord (241a) s'étendant vers la seconde extrémité du corps de boîtier (100), et le premier bord (231) de la troisième borne de conduction (230) comporte un premier segment de bord (231a) s'étendant vers la seconde extrémité du corps de boîtier (100),
dans lequel le premier segment de bord (241a) de la quatrième borne de conduction (240) et le premier segment de bord (231a) de la troisième borne de conduction (230) sont disposés pour être opposés l'un à l'autre et à distance l'un de l'autre dans la direction de la largeur (X) du corps de boîtier (100), et
dans lequel la broche d'anode (331) de la troisième diode montée en surface (330) est soudée sur une surface de bordure du premier segment de bord (231a) de la troisième borne de conduction (230), et le plot de cathode (332) de la troisième diode (330) est soudé sur une surface de bordure du premier segment de bord (241a) de la quatrième borne de conduction (240).

7. Boîtier de connexion photovoltaïque selon la revendication 6, dans lequel
le premier bord (231) de la troisième borne de conduction (230) s'étend depuis le premier côté jusqu'à la seconde extrémité du corps de boîtier (100) le long d'un trajet s'incurvant.

8. Boîtier de connexion photovoltaïque selon la revendication 7, dans lequel
la quatrième borne de conduction (240) est disposée dans une zone définie par le premier bord (231) de la troisième borne de conduction (230) et par le premier côté et la seconde extrémité du corps de boîtier (100).

9. Boîtier de connexion photovoltaïque selon la revendication 8,
dans lequel la deuxième borne de conduction (220) comporte un second bord (222) faisant face à la troisième borne de conduction (230), et la troisième borne de conduction (230) comporte un second bord (232) faisant face à la deuxième borne de conduction (220), et
dans lequel la broche d'anode (321) de la deuxième diode montée en surface (320) est soudée sur le second bord (222) de la deuxième borne de conduction (220), et le plot de cathode de la deuxième diode (320) est soudé sur le second bord (232) de la troisième borne de conduction (230).

10. Boîtier de connexion photovoltaïque selon la revendication 9, dans lequel
le second bord (222) de la deuxième borne de conduction (220) s'étend depuis le premier côté jusqu'au second côté du corps de boîtier (100) le long d'un trajet s'incurvant, et le second bord (232) de la troisième borne de conduction (230) s'étend depuis le premier côté jusqu'au second côté du corps de boîtier (100) le long d'un trajet s'incurvant.

11. Boîtier de connexion photovoltaïque selon la revendication 10, dans lequel
la première diode montée en surface (310) est disposée pour présenter un angle d'environ 90 degrés par rapport à la direction de la longueur (Y) du corps de boîtier (100),
la deuxième diode montée en surface (320) est disposée pour présenter un angle d'environ 45 degrés par rapport à la direction de la longueur (Y) du corps de boîtier (100), et
la troisième diode montée en surface (330) est disposée pour présenter un angle d'environ 270 degrés par rapport à la direction de la longueur (Y) du corps de boîtier (100).

12. Boîtier de connexion photovoltaïque selon la revendication 11, dans lequel
la première diode montée en surface (310) est disposée pour présenter un angle d'environ 45 degrés par rapport à la deuxième diode montée en surface (320), et la deuxième diode montée en surface (320) est disposée pour présenter un angle d'environ 135 degrés par rapport à la troisième diode montée en surface (330).

13. Boîtier de connexion photovoltaïque selon la revendication 4, dans lequel
la zone de surface de la troisième borne de conduction (230) est plus grande que celle des autres bornes de conduction (210, 220, 240).

14. Boîtier de connexion photovoltaïque selon la revendication 13, dans lequel
la zone de surface de la troisième borne de conduction (230) est plus grande que celle de la deuxième borne de conduction (220), la zone de surface de la deuxième borne de conduction (220) est plus grande que celle de la quatrième borne de conduction (240) et la zone de surface de la quatrième borne de conduction (240) est plus grande que celle de la première borne de conduction (210).
